# EUROPEAN PATENT APPLICATION

(11) **EP 4 781 825 A2**
(43) Date of publication of application: **29.07.2026**
(21) Application number: 25214118.9
(22) Date of filing: 06.11.2025
(51) Int. Cl.: A01K 97/12

(54) **BITE DETECTOR**

(30) Priority: 24.01.2025 GB 202501057
(71) Applicant: Fox International Group Limited, Warley Brentwood Essex CM14 5EG (GB)
(72) Inventor: BAMBROUGH, Thomas Malcolm, Brentwood, CM14 5EG (GB)
(74) Representative: Mathys & Squire

(57) **Abstract**

A bite detector (100) for detecting movement of a fishing line is disclosed herein. The bite detector comprises a vibratable member (125) configured to contact the fishing line, a means (135) for generating an electrical signal in response to vibration of the vibratable member by the fishing line, a bite detector housing (160), and a gaiter (129) disposed between an outer surface of the housing and a portion of the vibratable member, wherein the gaiter is arranged to provide a watertight seal.

## Description

### Field of the invention

The present disclosure relates to a bite detector for use by anglers.

### Background

In certain types of angling, such as fishing for carp, it may take a while for fish to take the bait and bite. Anglers therefore may use several rods at the same time to improve their chances of catching a fish. To enable several rods to be watched at the same time, an angler may use a bite detector.

GB2222060 describes an example of a conventional bite detector. The bite detector works by utilising a vibration sensor that will send electronic signals to a printed circuit board, PCB, and then a speaker. The bite detector comprises a V-shaped guide designed to secure a rod. A slot in the bottom of the V-shaped guide exposes a piezoelectric vibration sensor that sits in a small chamber beneath the V-shaped guide and receives the line depending from the rod. As the line moves due to a bite, it creates friction causing vibration. The movement or vibration is picked up through a piezoelectric vibration sensor which produces a very low electrical voltage. Electronics in the bite detector amplify and process this voltage, to give bite indication by way of audible and visual pulses. Sampling and filtering may be carried out to remove unwanted vibrations and the level of vibration sensed is translated into the repetition rate (or speed) of the pulses. A user may be able to adjust the overall sensitivity/response to compensate for different conditions, lines, methods and user preferences.

In GB2222060 the piezoelectric sensor is in the form of an elongate rod housed within the small chamber below the V-shaped guide, with the slot providing a means for the line to touch the piezoelectric sensor. One end of the rod is located in a rubber grommet which is in turn received in a hole in the housing of the bite detector. The other end of the elongate rod is fitted with a plastics end piece or stylus which just touches the line, and which has a notch for receiving the line.

Movement of the line is normally in a direction normal to the elongate rod, and as the line moves against the elongate rod, it vibrates and produces an alternating voltage. The amplitude of the voltage may be dependent on the amplitude of vibration, which in turn may depend on the speed of line movement.

However, a disadvantage with conventional bite detectors such as those disclosed in GB2222060 is that water may enter the chamber beneath the V-shaped recess. Water sitting around the bottom of the elongate rod may, over time, enter through the grommet for example via capillary action. Furthermore, when used in low temperatures, any water sitting around the bottom of the elongate rod may freeze which may inhibit or prevent the sensor from working. To mitigate this, in some designs of bite detectors there may exist a hole or other aperture to drain water out from the chamber. However, the inventors have found that water still manages to sit in this exposed chamber and bind to the sensor, for example via capillary action, when temperatures drop below freezing.

### Summary of the invention

Aspects of the invention are as set out in the independent claims and optional features are set out in the dependent claims. Aspects of the invention may be provided in conjunction with each other and features of one aspect may be applied to other aspects.

In a first aspect there is provided a bite detector for detecting movement of a fishing line. The bite detector comprises a vibratable member configured to contact the fishing line, a means for generating an electrical signal in response to vibration of the vibratable member by the fishing line, a bite detector housing, and a gaiter disposed between an outer surface of the bite detector housing and a portion of the vibratable member, the gaiter arranged to provide a watertight seal. In use, the bite detector housing may be configured to at least partly contain a portion of the means for generating an electrical signal in response to vibration of the vibratable member by the fishing line.

Embodiments of the disclosure may provide an improved bite detector that avoids issues where the vibration sensor may become frozen and static due to inadequate waterproofing. By contrast, embodiments of the disclosure use a gaiter that is sandwiched between the vibratable member and the case or housing which acts as an O ring for waterproofing. The gaiter may be made from an elastomer e.g. rubber, which can make it less sensitive but a worthwhile trade off. Furthermore, the vibratable member may be provided as part of a vibration sensing module which may be easier to replace.

The vibratable member may comprise a stylus. The stylus may comprise a lip against which the gaiter is arranged to abut. The stylus may comprise a resilient fork, and wherein the gaiter is arranged to abut a portion of the resilient fork. The gaiter may be arranged to be held in a compressed configuration between a portion of the stylus and the outer surface of the bite detector housing.

In some examples the vibratable member is provided as part of a vibration sensing module comprising the stylus and a housing surrounding the means for generating an electrical signal in response to vibration of the vibratable member. The housing may surround a lower portion of the means for generating an electrical signal. in use, the housing may be arranged to be contained within the bite detector housing. A gap or void may be provided between the stylus and the vibration sensing module housing, and the gaiter may be arranged to cover the gap or void. The gap or void may be arranged to provide a variable distance between the stylus and the vibration sensing module housing. The gaiter may have a lower flange for securing around the vibration sensing module housing and an upper clip for fastening to the stylus. The provision of the gap or void may allow the stylus to flex freely as required.

The means for generating an electrical signal in response to vibration of the vibratable member may comprise a piezoelectric sensing means configured to convert physical movement of the vibratable member into electrical signals.

In some examples, the means for generating an electrical signal is an elongate piezoelectric element. The gaiter may be coaxial with the piezoelectric element. The gaiter may envelope a portion of the piezoelectric element. The gaiter may be frustoconical and has a hole extending therethrough, through which the piezoelectric element extends. The lower portion/handle of the resilient fork/stylus may be frustoconical, and the degree of taper of the lower portion/handle of the resilient fork may match the taper of the gaiter such that they provide a continuous surface when coupled.

In some examples, the piezoelectric element comprises a first part contained in the bite detector housing, and a second part exposed outside of the bite detector housing, wherein the gaiter is disposed between an outer surface of the bite detector housing and a portion of the second part of the piezoelectric element.

The bite detector may further comprise a clip to fasten the vibration sensing module to the printed circuit board.

The vibration sensing module may have a pair of corresponding recesses for receiving the clip, and wherein the clip and/or the corresponding recesses are shaped such that as the vibration sensing module is fastened to the clip, the vibratable member is pulled downwards to provide a compressive force on the gaiter between the housing and the vibratable member. The clip and/or recesses may have a wedge-shaped portion to pull the vibratable member downwards as it is fastened to the clip. Advantageously this may provide a better seal with the bite detector housing to prevent water ingress.

The bite detector housing may comprise a front portion and a rear portion, and wherein the housing comprises a seal between the front portion and the rear portion. The vibration sensing module may be arranged to be held in place in the clip between the front portion of the bite detector housing and the printed circuit board.

**In** some examples the bite detector housing comprises a v-shaped recess for receiving a fishing rod, and wherein the vibratable member (for example, the stylus) is arranged to contact a line depending from the fishing rod in a slot in the bottom of the v-shaped recess.

The bite detector may further comprise means for providing both an audible and visible indication of line movement to a user. The bite detector may further comprise means for adjusting the volume and/or tone of the audible signal by the user. Additionally, or alternatively, the bite detector may further comprise means for adjusting the sensitivity of the bite detector by the user.

In another aspect there is provided a bite detector for detecting movement of a fishing line. The bite detector comprises a detachable vibration sensing module, and a bite detector housing arranged to contain a portion of the vibration sensing module. The bite detector housing comprises a clip inside the bite detector housing to releasably secure at least a portion of the vibration sensing module to the bite detector inside the bite detector housing.

The detachable vibration sensing module may comprise a vibratable member configured to contact the fishing line, and a gaiter arranged to be disposed between an outer surface of the bite detector housing and a portion of the vibratable member. The gaiter is arranged to provide a water-tight seal between the bite detector housing and a portion of the vibratable member.

The clip may be arranged to provide a compressive force between the gaiter and the bite detector housing as the vibration sensing module is secured to the bite detector, to provide a watertight seal.

The detachable vibration sensing module may comprise means for generating an electrical signal in response to vibration of the vibratable member, such as a piezoelectric element, for example an elongate piezoelectric element.

### Drawings

Embodiments of the disclosure will now be described, by way of example only, with reference to the accompanying drawings, in which:
Fig. 1 shows a side view of an example bite detector;
Fig. 2 shows a perspective view of the example bite detector of Fig. 1;
Fig. 3 shows a zoomed-in view of the bite detector shown in Fig. 2 with the front cover of the housing removed;
Fig. 4 shows a rear perspective view of the bite detector of Fig. 3 with a portion of the rear cover removed;
Fig. 5 shows a perspective view of the bite detector shown in Figs. 2 and 3 with the front cover of the housing removed;
Fig. 6 shows a zoomed-in perspective view of the bite detector of Fig. 4;
Fig. 7 shows another perspective view of the example bite detector with further portions of the housing removed;
Fig. 8 shows a zoomed-in front view of an example vibration sensing module detachably fastened to the bite detector;
Fig. 9 shows the zoomed-in front view of the example vibration sensing module of Fig. 8 detachably fastened to the bite detector with the housing surrounding the vibratable sensor removed;
Fig. 10 shows a front view of the example vibration sensing module of Figs. 8 and 9;
Fig. 11 shows a perspective view of the example vibration sensing module of Figs. 8 to 10;
Fig. 12 shows a perspective view of the example vibration sensing module in-situ in the bite detector;
Fig. 13 shows a cross-section of the example vibration sensing module in-situ in the bite detector with the housing removed;
Fig. 14 shows a perspective view of another embodiment of a bite detector with the front cover removed;
Fig. 15a shows a side view of the example vibration sensing module used in the second embodiment of Fig. 14; and
Fig. 15b shows an exploded view of the example vibration sensing module of Fig. 15a;
Fig. 16 shows a perspective view of the pair of shields for protecting the rod located in the bite detector.

### Specific description

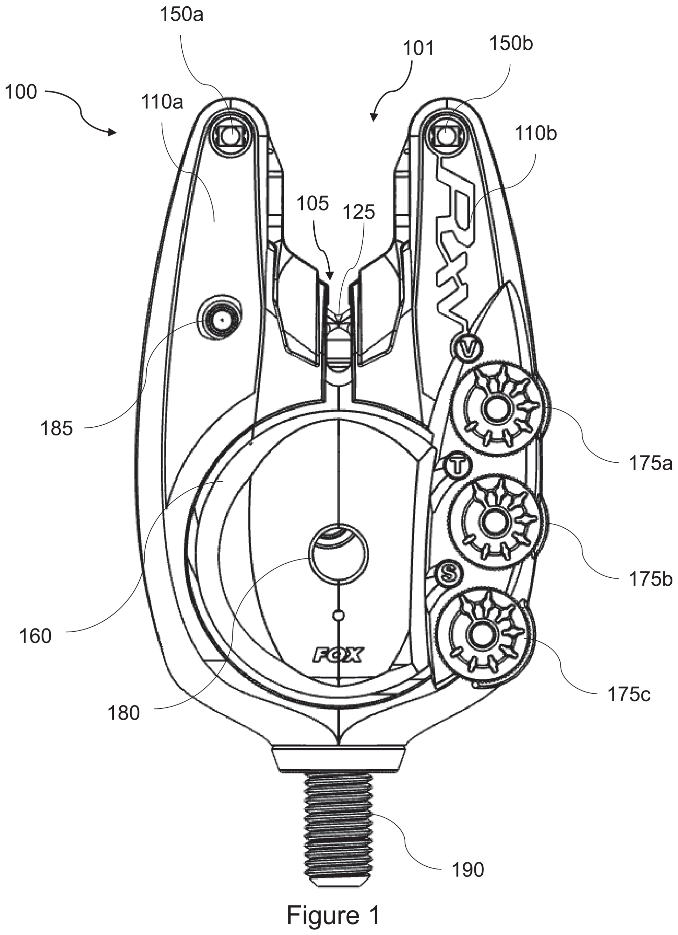

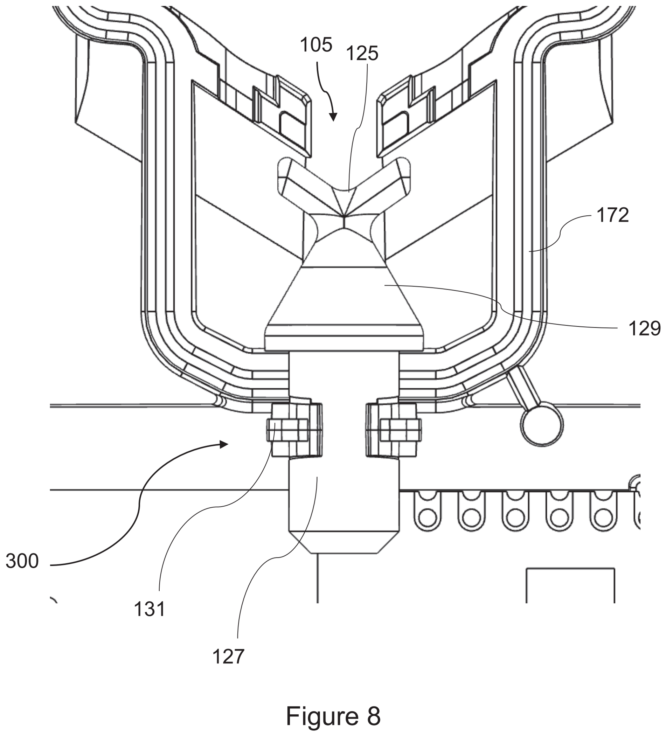

Figs. 1 to 7 all show different view of the same example bite detector, and Figs. 8 to 13 show an example detachable vibration sensing module 300 that may be used with the bite detector of Figs. 1 to 7.

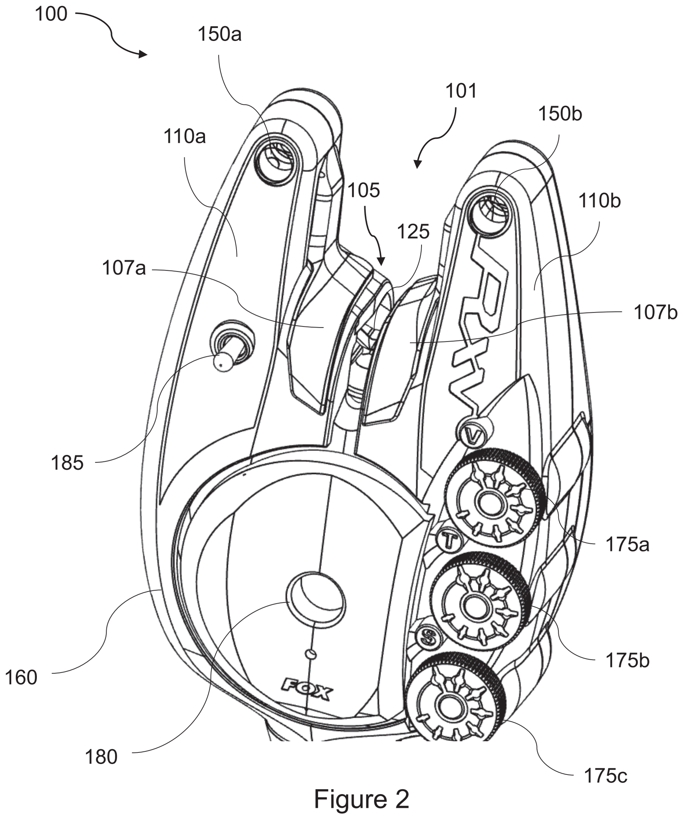

Fig. 1 shows a side view of an example bite detector 100 and Fig. 2 shows a perspective view of the example bite detector of Fig. 1. The bite detector 100 uses a vibration sensing module 300 comprising means 135 for generating an electrical signal in response to vibration of a vibratable member 125 of the vibration sensing module 300. The means 135 for generating an electrical signal in this example comprises a piezoelectric sensing means configured to convert physical movement of the vibratable member 125 into electrical signals. The means 135 for generating an electrical signal will send a signal to a speaker 180 and/or light emitting diodes 110a, 110b in response to vibration being detected so the angler is aware that a bite has occurred.

As shown in Figs. 1 and 2, the bite detector 100 comprises an outer housing 160 and a v-shaped guide or recess 101 designed to secure a rod. The outer housing 160 comprises a front cover and a rear cover. The v-shaped guide or recess 101 is formed by a pair of arms 110a, 110b that contain a respective light emitting diode 150a, 150b for providing a visual indicator to the angler that vibration has been detected. At the bottom of the v-shaped guide or recess 101 is a slot 105 arranged to receive a line depending from the rod located in the v-shaped guide or recess 101. In the slot 105 is a vibratable member 125 coupled to a means for generating an electrical signal in response to vibration of the vibratable member 125.

The bite detector 100 comprises means 175a for adjusting the volume and/or tone of the audible signal by the user, which in this example is a rotatable dial, means 175c for adjusting the sensitivity of the bite detector by the user, which in this example is a rotatable dial, and also means 175b for adjusting the tone of the audible signal by the user, which in this example is also rotatable dial. An on/off switch 185 is also provided for turning the bite detector 100 on and off. In this example the on/off switch 185 is a toggle switch.

At the bottom of the bite detector 100 is a screw thread 190 which is provided for connecting the bite detector 100 to a bank stick, for example.

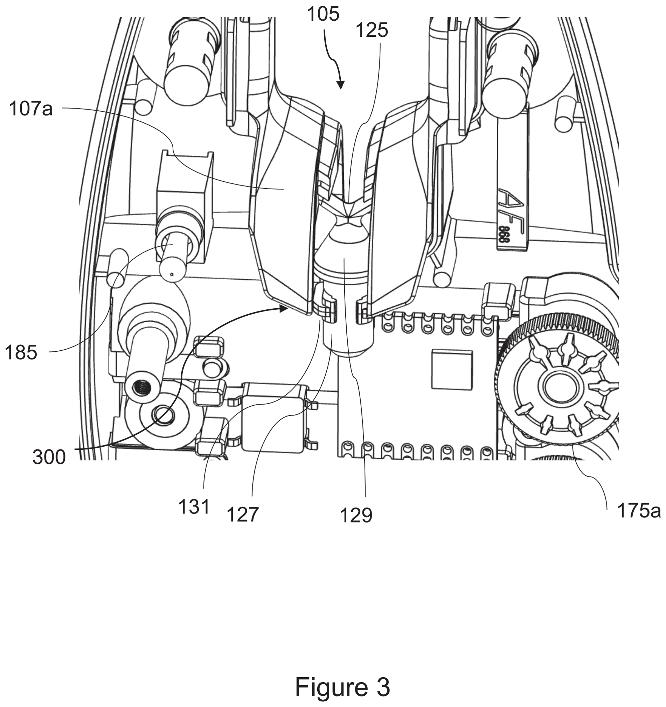

Fig. 3 shows a zoomed-in view of the bite detector shown in Fig. 2 with the front cover of the housing 160 removed. The vibration sensing module 300 is shown clipped to a PCB 170 of the bite detector 100 via a pair of clips 131 meaning the vibration sensing module 300 is detachably coupled to the bite detector 100.

In the example shown, the vibratable member 125 of the vibration sensing module 300 comprises a stylus 125 that comprises a resilient fork. The vibratable member 125 is coupled to the means 135 for generating an electrical signal in response to vibration of the vibratable member 125. The resilient fork 125 provides the "line V" which is where the fishing line contacts the vibration sensing module 300. The vibration sensing module 300 comprises a housing 127 that surrounds a lower portion of the means 135 for generating an electrical signal. In use, the stylus 125 of the vibration sensing module 300 is arranged to sit outside of the bite detector housing 150 (such that it is exposed to the fishing line), and the vibration sensing module housing 127 is arranged to be contained inside the bite detector housing 160. As such, in use a portion of the means 135 for generating an electrical signal is contained in the bite detector housing 160.

Between the housing 127 of the vibration sensing module 300, and the stylus 125, is a gaiter 129. In use, the gaiter 129 is disposed between an outer surface of the bite detector housing 160 and a portion of the vibratable member 125, which in this example is the stylus 125 of the vibration sensing module 300. The gaiter 129 is arranged to provide a watertight seal. This design of the gaiter 129 is such that it both covers the sensor and stops water ingress into the module 300, whilst also acting as an O-ring stopping water ingress into the bite detector housing 160.

The vibration sensing module 300, and specifically the housing 127 of the vibration sensing module 300, has a pair of corresponding recesses 128a, 128b for receiving each arm of the clip 131. As will be described in more detail below, the clip 313 and/or the corresponding recesses 128a, 128b are shaped such that as the vibration sensing module 300 is fastened to the bite detector 100 with the clips 131, the vibration sensing module 300 and therefore the stylus 125 are pulled downwards to provide a compressive force on the gaiter 129 between the housing 160 of the bite detector 100, and the portion of the vibration sensing module 300 (i.e., the stylus 125) not contained in the bite detector housing 160. As such, the gaiter 129 is arranged to be held in a compressed configuration between the stylus and the outer surface of the bite detector housing 160.

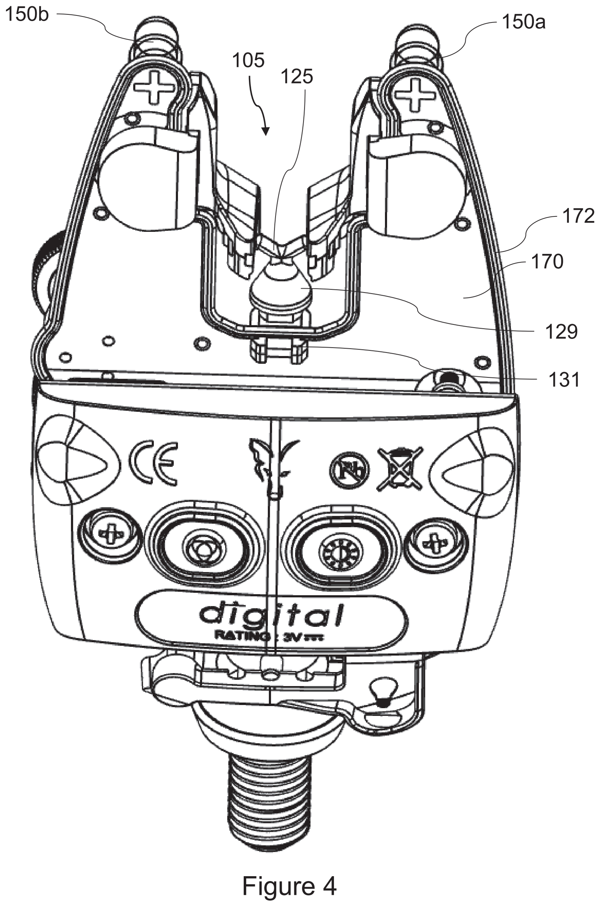

Fig. 4 shows a rear perspective view of the bite detector 100 of Fig. 3 with a portion of the rear cover removed. It can be seen how the clips comprise a pair of arms for coupling to the vibration sensing module 300 and a pair of legs for coupling to the PCB 170. In the example shown the PCB follows the generally v-shaped profile of the bite detector 100. Each clip 131 is also clipped into the PCB. In the example shown, each leg of the clip 131 comprises a cantilever snap joint configured to couple to a corresponding recess in the PCB. Each leg of the clip 131 comprises a cantilever beam with a tapered hook at its tip, which fits into a matching recess in the PCB 170. The structure of the tapered hook comprises a tapered surface configured to slide along a receiving surface, bending the cantilever and allowing the hook to snap back into its original state to fasten the clip 131 to the PCB.

Fig. 4 also shows how, around the perimeter of the PCB 170, there is a rubber seal 172. The rubber seal 172 acts to couple the rear cover the front cover of the housing 160 together to provide a water-tight seal. As the rear and front covers of the housing 160 are fastened together, the rubber seal 172 is sandwiched between the two covers of the housing 160. It will be understood that each of the front cover and the rear cover can be fastened to the PCB 170 and/or to each other with a detachable fastening means, such as screws that may fasten, for example, into corresponding holes 500 in the PCB 170. It will also be appreciated that appropriate waterproofing means will be provided such that each fastening means does not serve as a point of water ingress into the bite detector 100.

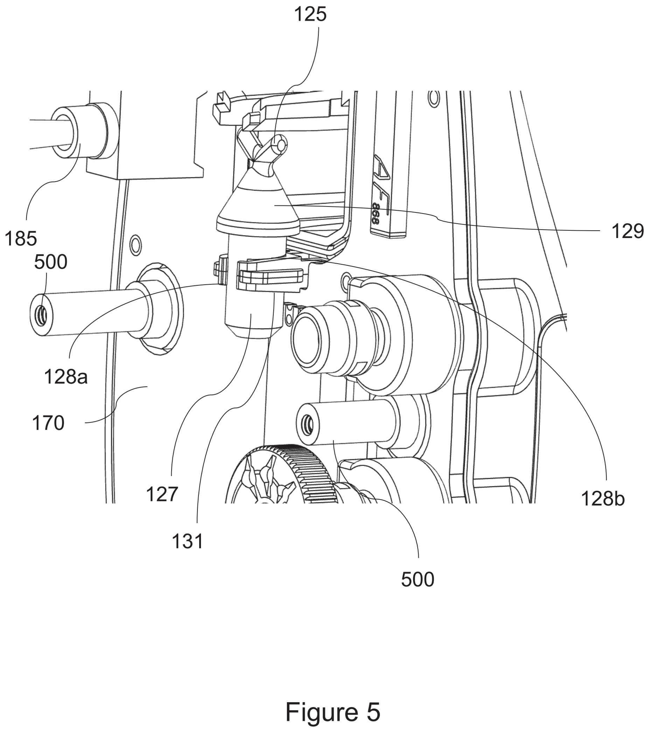

Fig. 5 shows a perspective view of the bite detector 100 shown in Figs. 2 and 3 with the front cover of the housing 160 removed. It can be seen how the housing 127 that surrounds the lower portion of the vibration sensing module 300 has a pair of corresponding recesses 128a, 128b for receiving each arm of the clip 131, and wherein each arm of the clip 131 and/or the corresponding recesses 138a, 138b are shaped such that as the vibration sensing module 300 is fastened to the bite detector 100 via the clip 131, the vibration sensing module 300 and thereby the vibratable member 125 is pulled downwards to provide a compressive force on the gaiter 129 between the housing 160 and the portion of the vibratable member 125 (i.e., the stylus 125) sitting outside the housing 160. In the example shown in Fig. 5, it can be seen that each arm of the clip 131 is wedge-shaped, i.e., each arm is tapered such that it is wider proximate to the PCB 170 that it is distal to the PCB 170. In the example shown it can also be seen how each arm of the clip 131 comprises a reinforcing rib extending the length of each arm along the central plane of each arm, to provide resilience to each arm. Fig. 5 also shows prongs 500 that project from the PCB 170. The PCB 170 is then sandwiched between the front and rear covers which are then fastened together to sandwich the PCB 170 in pave.

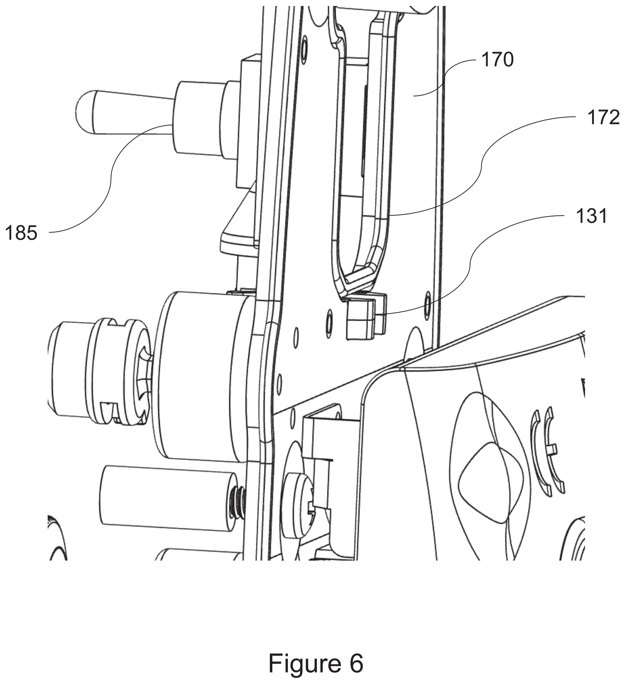

Fig. 6 shows a zoomed-in perspective view of the bite detector 100 of Fig. 4, slightly from the rear. Again, the rubber seal 172 that extends around the perimeter of the PCB 170 can be seen, along with the tapered hooks that form the end of each leg of the clip 131.

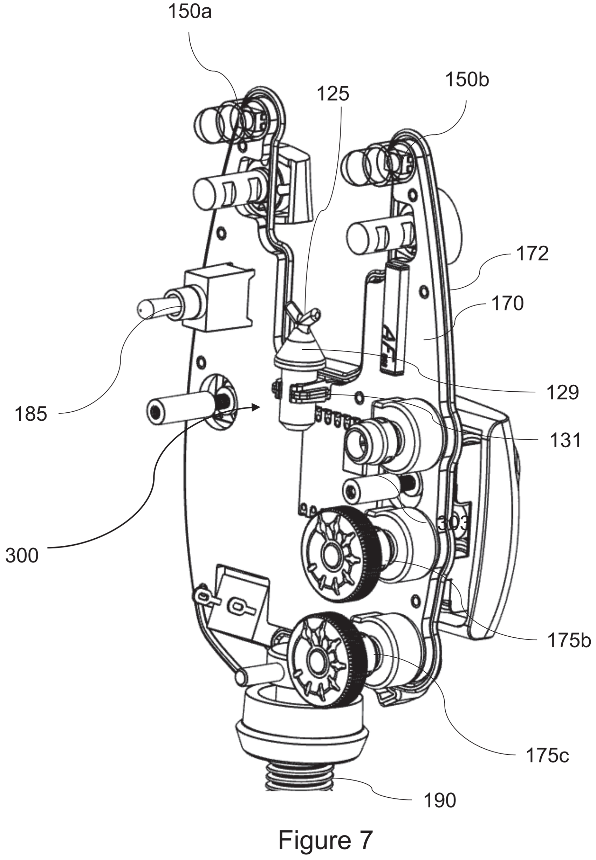

Fig. 7 shows another perspective view of the example bite detector 100 with further portions of the housing 160 removed. The vibration sensing module 300 and thereby the vibratable member 125 are arranged to be held in place in the clip 131 between the front portion of the bite detector housing 160 and the PCB 170. The clip 131 is arranged to couple the detachable vibration sensing module 300 to the PCB 170. The clip 131 is arranged to provide a compressive force between a portion of the vibration sensing module 300 and the bite detector housing 160 as the vibration sensing module 300 is secured to the bite detector 100, to provide a watertight seal. Although not shown in the Figures, the vibration sensing module 300 (and in particular, the means for generating an electrical signal in response to vibration of the vibratable member 125 by the fishing line, which in the examples shown is the piezoelectric element 135) may be electrically coupled to the PCB 170, for example via a wire, to send an electrical signal to the speaker 180 and/or light emitting diodes 110a, 110b in response to vibration being detected so the angler is aware that a bite has occurred.

Fig. 8 shows a zoomed-in front view of the example vibration sensing module 300 detachably fastened to the bite detector 100. It can be seen how the vibration sensing module 300 is detachably fastened to the PCB 170 via clip 131 in a position such that the stylus 125 is located in the slot 105 so that it is protected from the rod itself but exposed to a line depending from the rod. The vibration sensing module 300 therefore comprises a first part contained in the bite detector housing 160, and a second part exposed outside of the bite detector housing 160, wherein the gaiter 129 is disposed or sandwiched between an outer surface of the bite detector housing 160 and a portion of the second part, which in this example is the stylus 125.

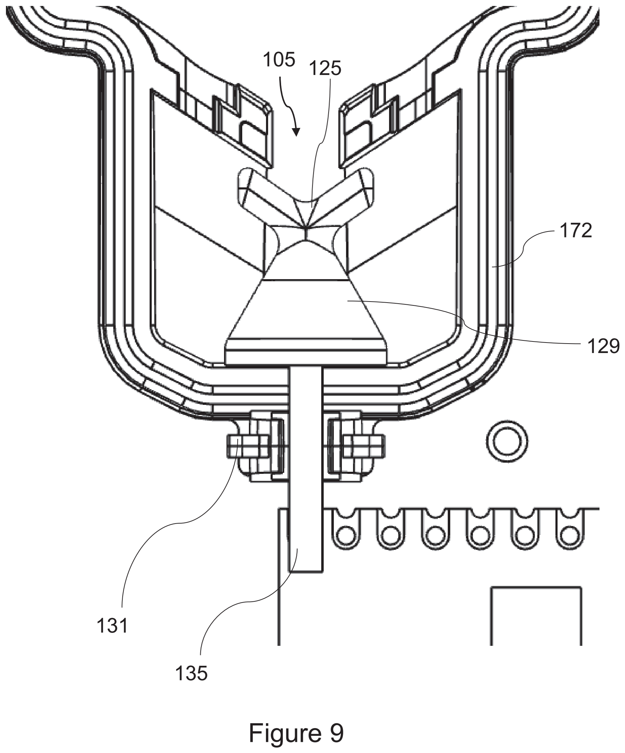

Fig. 9 shows the zoomed-in front view of the example vibration sensing module 300 of Fig. 8 detachably fastened to the bite detector 100 with the housing 127 surrounding the lower portion of the vibration sensing module 300 removed. The vibration sensing module 300 comprises a means 135 for generating an electric signal in response to vibration of the vibratable member 125. In this example, the means 135 for generating an electric signal is a piezoelectric element. The stylus 125 is coupled to an end of the piezoelectric element 135. Fig. 9 shows how the piezoelectric element 135 is in the form of an elongate rod and extends inside the vibration sensing module 300 from the stylus 125 at the top along the length of the vibration sensing module 300. The piezoelectric element 135 may be a known piezoelectric element such as the piezoelectric element described in GB2222060.

The gaiter 129 is frustoconical and has a hole extending therethrough, through which the piezoelectric element 135 extends. The gaiter 129 therefore envelopes a portion of the piezoelectric element 135 and is coaxial with the piezoelectric element 135.

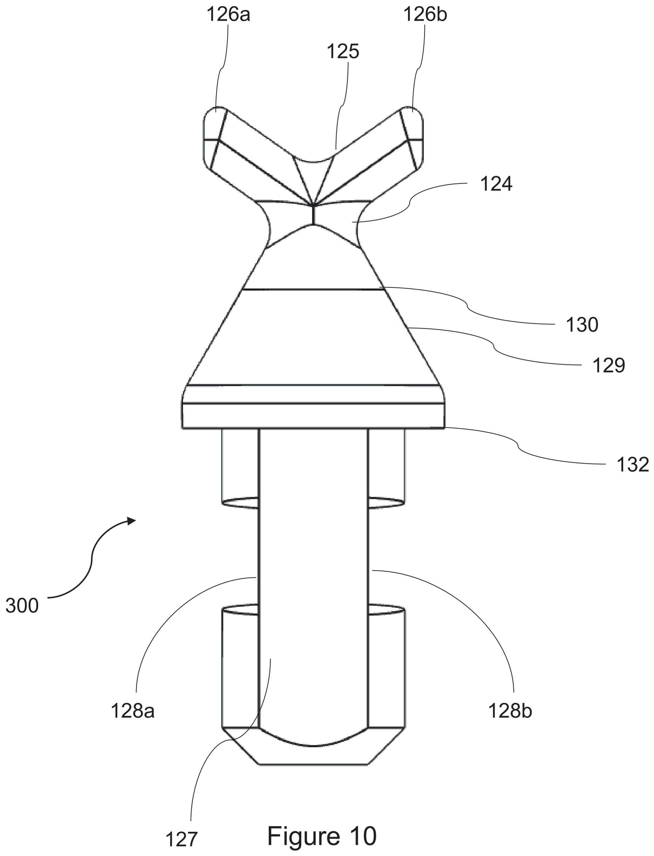

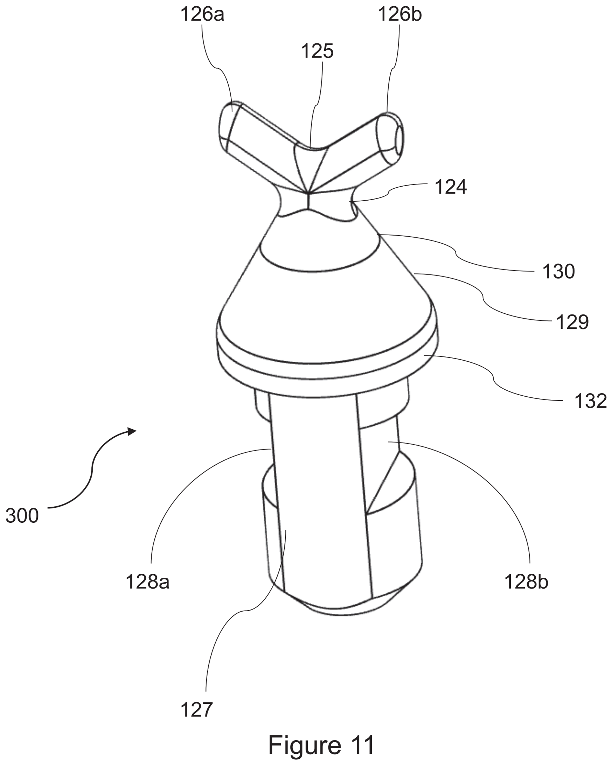

Fig. 10 shows a front view of the example vibration sensing module of Figs. 8 and 9. It can be seen from Figs. 10 and 11 how the stylus 125 comprises a resilient fork having a first prong 126a and a second prong 126b, wherein both prongs 126a, 126b extend up away from the piezoelectric element 135 and vibration sensing module 300 to provide a groove for receiving the line. The stylus 125 has a neck 124 that forms a narrow point, before the stylus 125 flares outwardly in a frustoconical shape to form a lower lip 130 to which the gaiter 129 abuts. The gaiter 129 also has a frustoconical shape that matches the profile of the stylus such that there is no step change in the surface between the gaiter 129 and the stylus 125. The gaiter 129 comprises a lower flange 132 arranged to provide a contact surface for contacting the outer surface of the housing 160 of the bite detector 100.

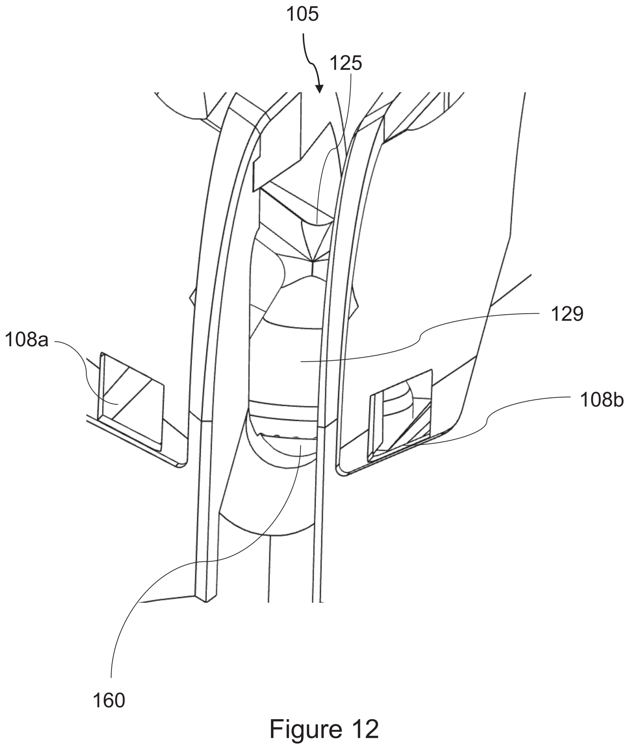

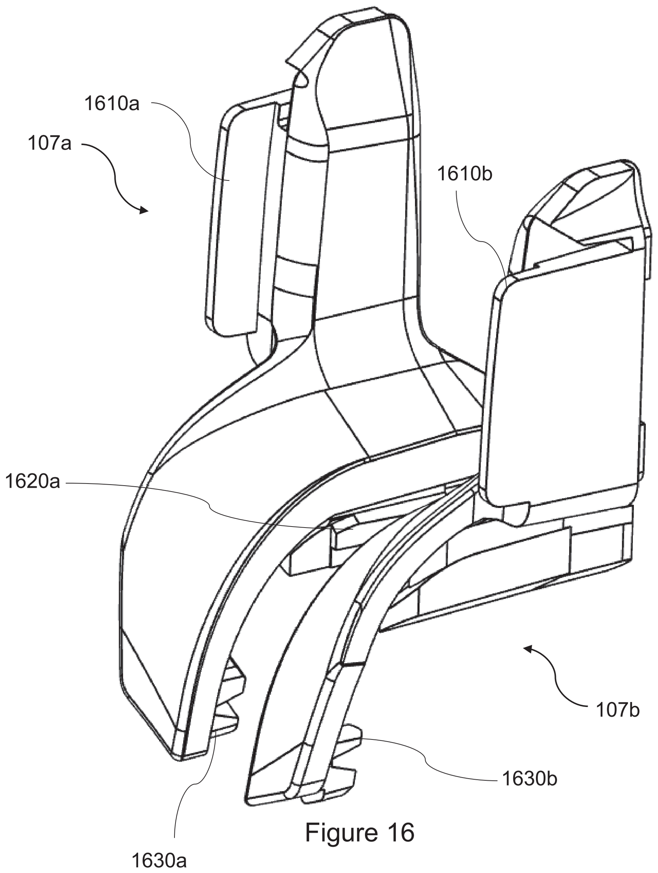

Fig. 12 shows a perspective view of the example vibration sensing module 300 in-situ in the bite detector 100. As shown in Fig. 12, in use the vibration sensing module 300 and thereby the piezoelectric element 135 comprises a first part contained in the bite detector housing 160, and a second part exposed outside of the bite detector housing 160. The gaiter 129 is disposed between an outer surface of the bite detector housing 160 and a portion of the second part of the piezoelectric element 135, which in this case is the stylus 125. The stylus 125 is partially protected by the housing 160 either side of the slot 105. As shown, for example, in Figs. 2 and 16, and as discussed in more detail below, a pair of shields 107a, 107b are detachably coupled to the housing 160 of the bite detector 100. Each shield 107a, 107b may be made from a resiliently deformable material such as rubber. Each shield 107a, 107b may act to provide a degree of protection to the fishing rod located in the recess 101. It can also be seen how the gaiter 129 abuts the outer surface of the housing 160 and is sandwiched between the housing 160 and the stylus 125.

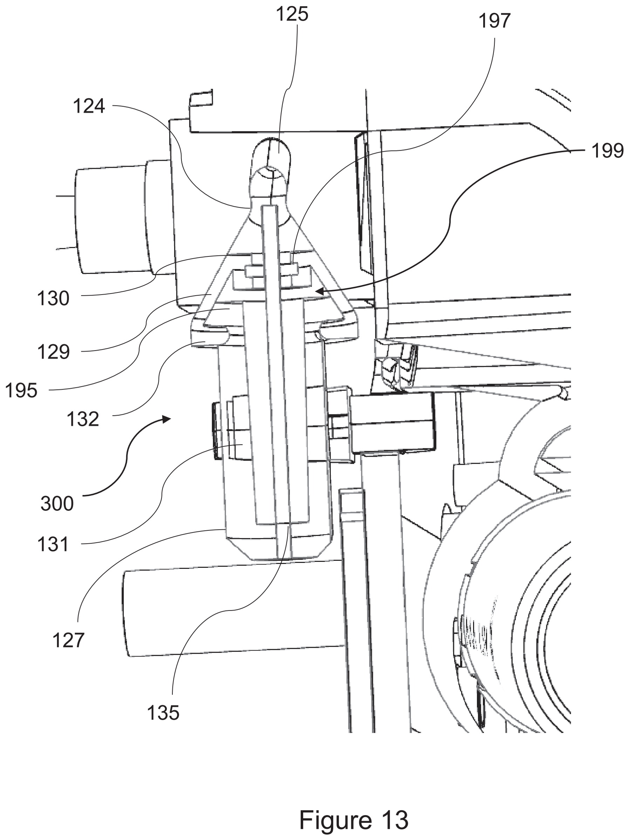

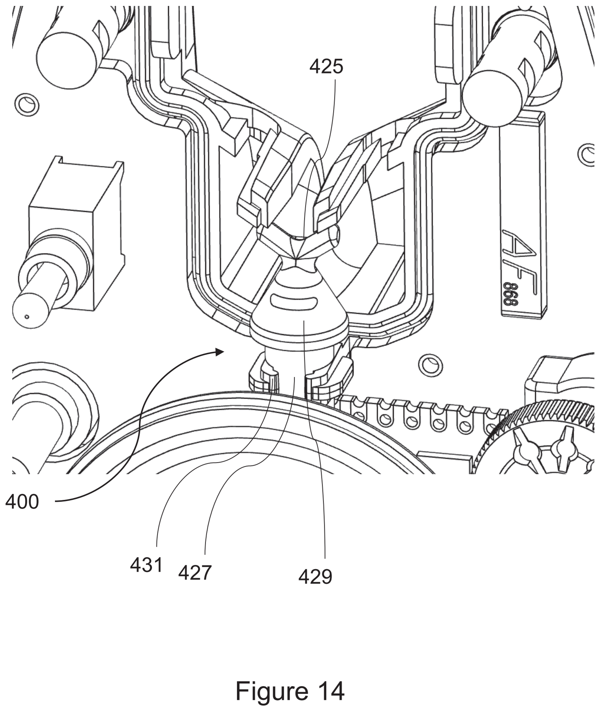

Fig. 13 shows a cross-section of the example vibration sensing module 300 in-situ in the bite detector with the housing 127 of the vibration sensing module 300 removed. Another example of a vibration sensing module 400 is shown in Figs. 14 to 15b. It can be seen how the gaiter 129 has an annular lower flange 132 for securing around the housing 127 surrounding a lower portion of the piezoelectric element 135 and an annular upper clip 197 for fastening to the stylus 125. The upper clip 197 is in this example in the form of an annular snap-fit joint of the sort typically used to join symmetrical round parts or cylindrical-shaped parts. These joints feature a bump (or ridge) around the circumference of the male component (the stylus 125), which interferes (and mates) with the groove in the tube-shaped female component (the gaiter 129). The lower flange 132 is fastened around a corresponding flange or annular protrusion 195 extending from the top of the housing 127. The provision of the flange or annular protrusion 195 extending from the top of the housing 127 may further act to improve the water resistance of the arrangement as in use the lower flange 132 of the gaiter 129 is squeezed between the flange or annular protrusion 195 and the outer surface of the housing 160 of the bite detector 100.

The piezoelectric element 135 is provided as part of and extends along the longitudinal axis of the vibration sensing module 300 and comprises the stylus 125 at one end. The housing 127 surrounds a lower portion of the piezoelectric element 135. A gap or void 199 is provided between the stylus 125 and the housing 127 of the piezoelectric element 135. The gaiter is arranged to cover the gap 199. The gap 199 is arranged to provide a variable distance between the stylus 125 and the housing 127 of the vibratable member to improve sensitivity of the piezoelectric element 135 to freely permit movement of the stylus 125 and thereby the piezoelectric element 135.

Fig. 13 also shows how the housing 127 of the vibration sensing module 300 has a pair of corresponding recesses 128a, 128b for receiving each arm of the clip 131. In Fig. 13 it can be seen how both each arm of the clip 131 and the corresponding recesses 128a, 128b are wedge-shaped or tapered such that as the vibration sensing module 300 and thereby the piezoelectric element135 is fastened to the clip 131, the vibration sensing module 300 and thereby the stylus 125 is pulled downwards to provide a compressive force on the gaiter 129 between the housing 160 and the stylus 125.

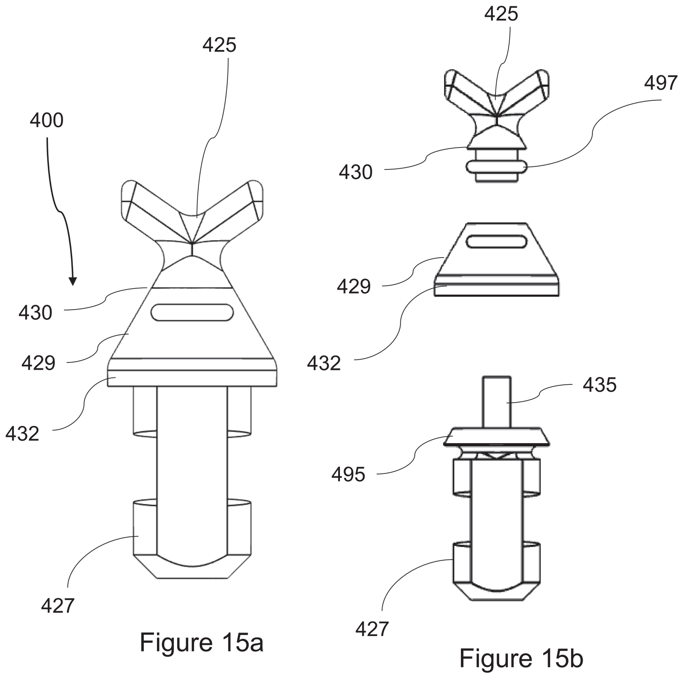

Fig. 14 shows a perspective view of another embodiment of a bite detector with the front cover removed. Fig. 15a shows a side view of the example vibration sensing module used in the second embodiment of Fig. 14, and Fig. 15b shows an exploded view of the example vibration sensing module of Fig. 15a. The embodiment of Figs. 14 to 15b is very similar to the earlier embodiment, and like reference numbers indicate features with the same or similar functionality.

In this example the gaiter 129 is over-moulded onto the vibration sensing module 400. Over-moulding may provide a more secure assembly (which may further limit water ingress) and simplify manufacturing. As can be seen in Fig. 15b, the lower flange 432 of the gaiter is moulded over a corresponding flange or annular protrusion 495 extending from the top of the housing 427, and the upper portion of the gaiter 429 is moulded over a ridge 497 extending from the bottom of the stylus 425.

Fig. 16 shows a perspective view of the pair of shields 107a, 107b for protecting the rod located in the bite detector. It will be understood that the shields 107a, 107b can be used with either embodiment of the bite detector. The shields 107a, 107b are made from a resiliently deformable material such as rubber. Each shield 107a, 107b may act to provide a degree of protection to the fishing rod located in the recess 101. The shields 107a, 107b are sandwiched between the front cover and rear cover of the housing 160, and to facilitate this each shield 107a, 107b comprises a pair of flanges 1610a,b, 1620a,b to be received by the front and rear covers of the housing 160 when they are assembled together. A first flange 16210a, b is configured to be sandwiched between the front and rear covers of the housing 160 forming the arms 110a, 110b, while a second flange 1620a, b is configured to be sandwiched between the portion of the front and rear covers of the housing 160 proximate to the slot 105 and vibratable member 125 in use. Each shield further comprises protrusions 1630a, 1630b configured to clip or snap fit into corresponding cavities or holes 108a, 108b in the housing 160 to further secure the lower part of each shield 107a, 107b to the housing 160 to stop it flapping about. It will be understood that in other embodiments, however, the shields 107a, 107b may be over-moulded onto the housing 160.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

It will be appreciated from the discussion above that the embodiments shown in the Figures are merely exemplary, and include features which may be generalised, removed or replaced as described herein and as set out in the claims. In the context of the present disclosure other examples and variations of the apparatus and methods described herein will be apparent to a person of skill in the art.

## Claims

1. A bite detector for detecting movement of a fishing line, the bite detector comprising:
a vibratable member configured to contact the fishing line;
a means for generating an electrical signal in response to vibration of the vibratable member by the fishing line;
a bite detector housing; and
a gaiter disposed between an outer surface of the bite detector housing and a portion of the vibratable member, the gaiter arranged to provide a watertight seal.

2. The bite detector of claim 1 wherein the vibratable member comprises a stylus, and wherein optionally the stylus comprises a lip against which the gaiter is arranged to abut, and wherein optionally the stylus comprises a resilient fork.

3. The bite detector of claim 2, wherein the gaiter is arranged to be held in a compressed configuration between a portion of the stylus and the outer surface of the bite detector housing.

4. The bite detector of claims 2 or 3, wherein the stylus and means for generating an electrical signal are provided as part of a vibration sensing module comprising the stylus and a housing surrounding the means for generating an electrical signal, and a gap between the stylus and the vibration sensing module housing, and wherein the gaiter is arranged to cover the gap, wherein the gap is arranged to provide a variable distance between the stylus and the vibration sensing module housing, and wherein optionally the gaiter has a lower flange for securing around the vibration sensing module housing and an upper clip for fastening to the stylus.

5. The bite detector of claim 4, wherein the means for generating an electrical signal is a piezoelectric element, and wherein the gaiter is coaxial with the piezoelectric element, and wherein optionally the gaiter envelopes a portion of the piezoelectric element, and wherein optionally the gaiter is frustoconical and has a hole extending therethrough, through which the piezoelectric element extends.

6. The bite detector of claim 5, wherein the piezoelectric element comprises a first part contained in the bite detector housing, and a second part exposed outside of the bite detector housing, wherein the gaiter is disposed between an outer surface of the bite detector housing and a portion of the second part of the piezoelectric element.

7. The bite detector of any of claims 4 to 6, wherein the bite detector further comprises a clip to fasten the vibration sensing module to a printed circuit board, and wherein optionally the vibration sensing module has a pair of corresponding recesses for receiving the clip, and wherein the clip and/or the corresponding recesses are shaped such that as the vibration sensing module is fastened to the clip, the vibratable member is pulled downwards to provide a compressive force on the gaiter between the bite detector housing and the vibratable member

8. The bite detector of any of the previous claims wherein the bite detector housing comprises a front portion and a rear portion, and wherein the housing comprises a seal between the front portion and the rear portion.

9. The bite detector of claim 8 as dependent on claim 7, wherein the vibration sensing module is arranged to be held in place in the clip between the front portion of the bite detector housing and the printed circuit board.

10. The bite detector of any of the previous claims, wherein the bite detector housing comprises a v-shaped recess for receiving a fishing rod, and wherein the vibratable member is arranged to contact a line depending from the fishing rod in a slot in the bottom of the v-shaped recess.

11. The bite detector of any of the previous claims further comprising means for providing both an audible and visible indication of line movement to a user, wherein optionally the bite detector further comprises means for adjusting the volume and/or tone of the audible signal by the user.

12. The bite detector of any of the previous claims further comprising means for adjusting the sensitivity of the bite detector by the user.

13. A bite detector for detecting movement of a fishing line, the bite detector comprising:
a detachable vibration sensing module; and
a bite detector housing arranged to contain a portion of the vibration sensing module;
wherein the bite detector housing comprises a clip inside the bite detector housing to releasably secure at least a portion of the vibration sensing module to the bite detector inside the bite detector housing.

14. The bite detector of claim 13, wherein the detachable vibration sensing module comprises:
a vibratable member configured to contact the fishing line; and
a gaiter arranged to be disposed between an outer surface of the bite detector housing and a portion of the vibratable member, the gaiter arranged to provide a water-tight seal, and wherein optionally the clip is arranged to provide a compressive force between the gaiter and the bite detector housing as the vibration sensing module is secured to the bite detector, to provide a watertight seal.

15. The bite detector of claim 13 or 14 wherein the detachable vibration sensing module comprises means for generating an electrical signal in response to vibration of the vibratable member.
